# EUROPEAN PATENT APPLICATION

(11) **EP 0 533 292 A1**
(43) Date of publication of application: **24.03.1993**
(21) Application number: 92202858.4
(22) Date of filing: 17.09.1992
(51) Int. Cl.: F16C 33/46, F16C 33/38

(54) **Rolling element bearing and cage therefore**

(30) Priority: 20.09.1991 NL 9101591
(71) Applicant: S.K.F. INDUSTRIAL TRADING & DEVELOPMENT COMPANY B.V., Nieuwegein (NL)
(72) Inventor: Van Brakel, Ronald Johannes, NL-3972 SG Driebergen-Rijssenburg (NL); Dolfsma, Hendrik, NL-3999 NW Tull en 't Waal (NL)
(74) Representative: de Bruijn, Leendert C.

(57) **Abstract**

A rolling element bearing comprises an outer race (1, 7), an inner race (2, 8) placed therein and a plurality of rolling elements (3, 9) which are placed between the facing bearing surfaces of these races and which are separated from one another by a cage (4), placed between the races (1, 7; 2, 8). The cage (4) is made essentially of a strip of material formed into a ring wherein there are provided openings, placed at like distances apart, each surrounding at least one rolling element (3, 9), said cage (4), along its outer edges, being provided with shoulders (5, 11), projecting radially, which rest against edges (1',8') present on either side of the bearing surface (6, 12) of one of the races (1, 8). The bending stiffness of each shoulder (5; 11) in the plane of said shoulder is of such magnitude that out-of-roundness of the cage (4) is prevented. Preferably the shoulders (5, 11) are connected to each other by means of axially oriented transverse parts (13) which at their axial ends are completely covered by a respective shoulder (5, 11).

## Description

The invention relates to a rolling element bearing comprising an outer race, an inner race placed therein and a plurality of rolling elements which are placed between the facing bearing surfaces of these races and which are separated from one another by a cage placed between the races, which is made essentially of a strip of material formed into a ring wherein there are provided openings, placed at like distances apart, each surrounding at least one rolling element, said cage, along its outer edges, being provided with shoulders, projecting radially, which rest against edges present on either side of the bearing surface of one of the races.

Such a rolling element is known from US-A-3075278. A bearing of the type mentioned must be well lubricated when in operation. However, it is unavoidable that lubrication is not always optimal, the result of which is that in case of stagnation of the lubricant supply, the lubricating film between the rolling elements and the cage is interrupted, causing direct contact between the cage and the rolling elements, with the result that the bearing will run unevenly and the cage, in the course of time, may fracture, owing to which the entire bearing fails, unless the lubricant supply is restored in time.

It is obvious, that in certain applications of a rolling element bearing of the type mentioned, for example in the gearbox of a helicopter, any chance of failure of the rolling element bearing as a result of a relatively short-lived non-optimal supply of lubricant, for example owing to an inclined position of the helicopter, is unacceptable.

It has therefore already been proposed that the cage of the bearing may be made of silver-coated steel. Tests have revealed that such a cage fails only after about eight hours when the lubricant supply is interrupted. Such a cage, however, is very costly and relatively heavy.

A cage of nylon is much cheaper and, in addition, is relatively light in weight, flexible, strong and easy to make. However, such a nylon cage may become deformed, owing to which, particularly in rolling element bearings with a relatively great diameter, as a consequence of the rotation and sliding of the rolling elements within the openings in the cage, the cage has a tendency to go out-of-round with the result that it becomes unstable and may fail. This phenomenon occurs to an increased extent when lubricant is lacking; tests have shown that a cage of nylon already fails about one-half hour after supply of lubricant has stopped.

In this respect, the cage known from US-A-3075278 has the disadvantage that it goes readily out-of-round having regard to the great flexibility of the shoulders.

The object of the invention is therefore to procure a rolling element bearing with a cage which is inexpensive and yet does not fail relatively rapidly in the event of an interruption of the lubricant supply.

This object is accomplished in that the bending stiffness of each shoulder in the plane of said shoulder is of such magnitude that out-of-roundness of the cage is prevented.

Due to the combination of the cage support provided by the shouders, and the relatively high bending stiffness of said shoulders, a reliable behaviour of the bearing cage is obtained. Thereby, the cage also behaves statisfactorily when lubricant is lacking during longer periods.

Thanks to the above mentioned measures in the cage according to the invention, the cage may advantageously be made of nylon so that all the above mentioned advantages of a nylon cage are present, while, as tests have shown, the cage only fails about six hours after the lubricant supply has ceased, so that a cage according to the invention has practically the same service life, after cut-off of the lubricant supply, as the more costly cages.

A cage of polyether ether ketone (PEEK) likewise performs reasonably well, such a cage failing only about six hours after the lubricant supply is interrupted.

According to a first embodiment, the axial width of each shoulder is about one fifth of the total cage width.

In a second, preferred embodiment, the shoulders are connected to each other by means of axially oriented transverse parts which at their axial ends are completely covered by a respective shoulder. The radial dimension of the shoulders in this embodiment is relatively large, which results in a very high bending stiffness of the cage.

The invention is explained below in detail with reference to the drawing, wherein
Figure 1 shows a radial cross section through a roller bearing according to a first embodiment of the invention, and
Figure 2 represents a radial cross section through a roller bearing according to a second embodiment of the invention.

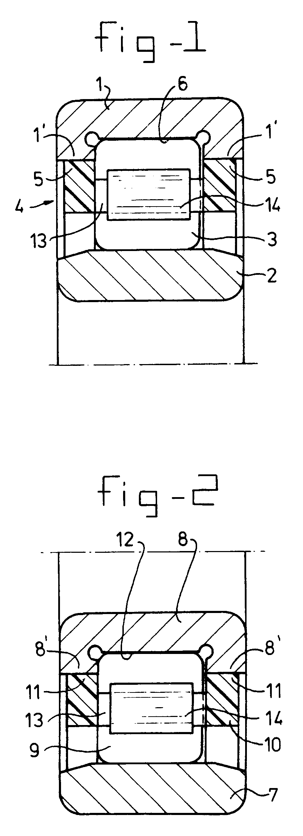

Figure 1 shows the roller bearing in an application where the outer race 1 is the stationary race and the inner race 2 is the rotating race. Between the races 1 and 2 there is placed a row of rollers 3, which rollers are separated from one another by a cage 4.

The cage 4 is provided along each of its outer edges with an annular shouder 5, projecting radially, which shoulders 5 rest against the edges 1' present on either side of the bearing surface 6 of the race 1. The shoulders 5 are connected to each other by means of axially oriented transverse parts 13. The sides facing each other of these transverse parts 13 are concave at 14.

The radial dimensions of shoulders 5 and transverse parts 13 are such that the axial ends of said parts 13 are completely covered by the shoulders 5. Thereby, a cage 5 with high bending stiffness is obtained.

As shown in Figure 2, the roller bearing comprises an outer race 7 in applications where it is the rotating race and an inner race 8 which is the stationary race. Between the race 7 and 8 there is again provided a row of rollers 9, which are separated from another by a cage 10.

The cage 10 is provided with annular shoulders 11, projecting radially, which rest against the edges 8' present on either side of the bearing surface 12 of the race 8.

## Claims

1. Rolling element bearing comprising an outer race (1, 7), an inner race (2, 8) placed therein and a plurality of rolling elements (3, 9) which are placed between the facing bearing surfaces of these races and which are separated from one another by a cage (4), placed between the races (1, 7; 2, 8), which cage (4) is made essentially of a strip of material formed into a ring wherein there are provided openings, placed at like distances apart, each surrounding at least one rolling element (3, 9), said cage (4), along its outer edges, being provided with shoulders (5, 11), projecting radially, which rest against edges (1' ,8') present on either side of the bearing surface (6, 12) of one of the races (1, 8), characterized in that the bending stiffness of each shoulder (5; 11) in the plane of said shoulder is of such magnitude that out-of-roundness of the cage (4) is prevented.

2. Rolling element bearing according to claim 1, whereby the axial width of each shoulder (5, 11) is about one fifth of the total cage width.

3. Rolling element bearing according to claim 1 or 2, whereby the shoulders (5, 11) are connected to each other by means of axially oriented transverse parts (13) which at their axial ends are completely covered by a respective shoulder (5, 11).

4. Rolling element bearing according to claim 3, whereby the transverse parts (13) at their sides (14) facing each other have a concave shape for holding a rolling element (3).

5. Rolling elements bearing according to claim 3 or 4, whereby the shoulders (5, 11) project radially with respect to the transverse parts (13).

6. Rolling element bearing according to any of the preceding claims whereby the cage (4) consists of nylon.

7. Rolling element bearing according to any of claims 1-5, whereby the cage (4) consists of PEEK.

8. Cage for a rolling element bearing according to any of the preceding claims.
